# EUROPEAN PATENT APPLICATION

(11) **EP 4 807 888 A1**
(43) Date of publication of application: **16.09.2026**
(21) Application number: 24895499.2
(22) Date of filing: 30.05.2024
(51) Int. Cl.: H01M 50/528

(54) **BATTERY CELL, BATTERY PACK, AND ELECTRIC DEVICE**

(30) Priority: 01.12.2023 CN 202323293606 U
(71) Applicant: Contemporary Amperex Technology Co., Limited, Ningde, Fujian 352100 (CN)
(72) Inventor: SU, Huasheng, Ningde, Fujian 352100 (CN); ZHENG, Yulian, Ningde, Fujian 352100 (CN)
(74) Representative: Kraus & Lederer PartGmbB
(86) International application number: PCT/CN2024/096318
(87) International publication number: WO 2025/112390

(57) **Abstract**

A battery cell (500), a battery pack (400), and an electric device (1000) are provided. The battery cell (500) includes a casing (510), an electrode assembly (520), and an adapter (100), where the casing (510) is provided with two electrode terminals (511,512), the electrode assembly (520) includes two tabs (521,522) having opposite polarities, the adapter (100) is disposed between the electrode assembly (520) and the casing (510) and includes two adapter portions (110,120), a first adapter portion (110) is connected to a first electrode terminal (511) and a first tab (521), the second adapter portion (120) is electrically connected to the second electrode terminal (512) and the second tab (522), and part of the first adapter portion (110) and part of the second adapter portion (120) are arranged in an overlapping manner in the axial direction of the battery cell (500).

## Description

### CROSS-REFERENCE TO RELATED APPLICATIONS

This application claims priority to the Chinese patent application with the Chinese patent application No. 202323293606.2, filed on December 1, 2023 and entitled "BATTERY CELL, BATTERY PACK, AND ELECTRIC DEVICE", which is incorporated herein by reference in its entirety.

### TECHNICAL FIELD

This application pertains to the field of battery technologies, and specifically relates to a battery cell, a battery pack, and an electric device.

### BACKGROUND

Batteries, especially cylindrical batteries, are widely applied to fields such as electric vehicles and consumer digital products due to their characteristics of unified standard, high energy density, excellent cycling performance, and convenient carrying. In order to reduce the volume of a battery, increase the energy density of the battery, or facilitate the connection among a plurality of batteries, a positive electrode tab and a negative electrode tab of the battery are usually disposed on the same side of the battery, that is, the positive electrode and the negative electrode of the battery are led out from the same side.

However, when an existing battery adopts the same-side lead-out of the positive electrode and the negative electrode, current passing areas of a positive electrode current collecting disc and a negative electrode current collecting disc are relatively small, which causes relatively large resistance, fails to achieve high-power current passing, and affects the service performance of the battery.

### SUMMARY

To this end, a first aspect of this application provides a battery cell, where an adapter of the battery cell has a sufficient current passing area, so as to solve the technical problem existing in the prior art that the current passing areas of a positive electrode current collecting disc and a negative electrode current collecting disc are small, the resistance is relatively large, and high-power current passing cannot be achieved, thereby ensuring the service performance of the battery cell to a certain extent.

The battery cell according to embodiments of this application includes: a casing, where the casing is provided with a first electrode terminal and a second electrode terminal; an electrode assembly, where the electrode assembly includes a first tab and a second tab having opposite polarities; and an adapter, where the adapter is disposed between the electrode assembly and the casing and includes a first adapter portion and a second adapter portion, the first adapter portion is electrically connected to the first electrode terminal and the first tab, the second adapter portion is electrically connected to the second electrode terminal and the second tab, and at least part of the first adapter portion and at least part of the second adapter portion are arranged in an overlapping manner in an axial direction of the battery cell.

In the battery cell according to embodiments of this application, by arranging at least part of the first adapter portion and at least part of the second adapter portion in an overlapping manner in the axial direction of the battery cell, the areas of the first adapter portion and the second adapter portion can be increased. This improves the current passing capabilities of the first adapter portion and the second adapter portion, that is, raises the current passing capability of the adapter, achieves high-power current passing, and optimizes the working performance of the battery cell.

Optionally, the first adapter portion includes a first connection end, a second connection end, and a first intermediate portion, where the first connection end is electrically connected to the first tab, the second connection end is electrically connected to the first electrode terminal, and the first intermediate portion is electrically connected to the first connection end and the second connection end; and the second adapter portion includes a third connection end, a fourth connection end, and a second intermediate portion, where the third connection end is electrically connected to the second tab, the fourth connection end is electrically connected to the second electrode terminal, and the second intermediate portion is electrically connected to the third connection end and the fourth connection end; and in a first direction, the first connection end and the third connection end are spaced apart from each other, the second connection end and the fourth connection end are spaced apart from each other, the first intermediate portion and the second intermediate portion are arranged in an overlapping manner in the axial direction of the battery cell, and the first direction intersects the axial direction. By such arrangement, the areas of the first intermediate portion and the second intermediate portion can be increased, so as to improve the current passing capabilities of the first intermediate portion and the second intermediate portion, that is, raise the current passing capabilities of the first adapter portion and the second adapter portion, achieve high-power current passing, and optimize the working performance of the battery cell.

Optionally, the first intermediate portion includes a first protruding portion, the first protruding portion protruding from the first connection end toward the second adapter portion; and/or the second intermediate portion includes a second protruding portion, the second protruding portion protruding from the third connection end toward the first adapter portion. Such arrangement enables the first intermediate portion and the second intermediate portion to be effectively overlapped in the axial direction of the battery cell, so as to ensure the areas of the first intermediate portion and the second intermediate portion to a certain extent, and improve the current passing capabilities of the first intermediate portion and the second intermediate portion, that is, raising the current passing capabilities of the first adapter portion and the second adapter portion.

Optionally, a protruding length of the first protruding portion does not exceed the second intermediate portion, and a protruding length of the second protruding portion does not exceed the first intermediate portion. On the premise of ensuring the current passing areas of the first intermediate portion and the second intermediate portion to a certain extent, this arrangement can prevent, to a certain extent, the first protruding portion exceeding the second protruding portion and being electrically connected to the second adapter portion, the second electrode terminal, and/or the second tab, and can also prevent, to a certain extent, the second protruding portion exceeding the first protruding portion and being electrically connected to the first adapter portion, the first electrode terminal, and/or the first tab, thereby ensuring the working performance of the battery cell to a certain extent.

Optionally, a width of the first intermediate portion and/or the second intermediate portion in the first direction is w, and a diameter of the battery cell is D, where 3 mm ≤ w ≤ D - 2 mm. In this way, while ensuring the areas of the first intermediate portion and the second intermediate portion to a certain extent, this arrangement can reduce the material cost of the first intermediate portion and the second intermediate portion, and prevent the first intermediate portion and the second intermediate portion from exceeding the battery cell and being electrically connected to other structural members to a certain extent, so as to ensure the working performance of the battery cell to a certain extent.

Optionally, 6 mm ≤ w ≤ D - 4 mm. This further ensures the areas of the first intermediate portion and the second intermediate portion to a certain extent, and prevents the first intermediate portion and the second intermediate portion from exceeding the battery cell and being electrically connected to other structural members to a certain extent, so as to ensure the working performance of the battery cell to a certain extent.

Optionally, the first adapter portion is formed as a bent member, the first connection end, the first intermediate portion, and the second connection end are stacked in a second direction, and the second direction intersects the first direction; and the second adapter portion is formed as a bent member, and the third connection end, the second intermediate portion, and the fourth connection end are stacked in the second direction. This structure facilitates the first adapter portion to connect two structural members spaced apart in the second direction, facilitates the second adapter portion to connect two structural members spaced apart in the second direction, reduces the connection difficulty between two structural members spaced apart in the second direction, helps reduce the radial dimension of the battery cell, and reduces the assembly difficulty of the battery cell.

Optionally, the first adapter portion is a copper adapter portion; and the second adapter portion is an aluminum adapter portion. By adopting such material matching, the first adapter portion and the second adapter portion can cooperate to achieve electrical connection between the positive electrode of the electrode assembly and the positive electrode terminal of the casing, and electrical connection between the negative electrode of the electrode assembly and the negative electrode terminal of the casing respectively, so as to ensure the working performance of the battery cell to a certain extent.

Optionally, the adapter further includes a first insulating member, and in an overlapping direction, the first insulating member is at least located between the first intermediate portion and the second intermediate portion. This arrangement enables the first insulating member to form an insulating fit between the first intermediate portion and the second intermediate portion, so as to prevent electrical connection between the first intermediate portion and the second intermediate portion to a certain extent, that is, prevent electrical connection between the first adapter portion and the second adapter portion to a certain extent, and ensure the working performance and service reliability of the battery cell to a certain extent.

Optionally, at least one of the first intermediate portion and the second intermediate portion is provided with a first positioning structure for positioning the first insulating member. The first positioning structure can position the first insulating member, improve the positional stability of the first insulating member, enable the first insulating member to be stably arranged between the first protruding portion and the second protruding portion, ensure electrical connection between the first protruding portion and the second protruding portion to a certain extent, and also reduce the positioning difficulty of the first insulating member.

Optionally, the first positioning structure is a positioning hole, and a part of the first insulating member is accommodated in the first positioning structure. This achieves the positioning fit between the first positioning structure and the first insulating member, facilitates positioning of the first insulating member through the first positioning structure, improves the positional stability of the first insulating member, and reduces the positioning difficulty of the first insulating member.

Optionally, the first intermediate portion is provided with a first accommodating groove for accommodating the first insulating member; and/or the second intermediate portion is provided with a second accommodating groove for accommodating the first insulating member. The arrangement of the accommodating grooves enables the first insulating member to be effectively disposed between the first protruding portion and the second protruding portion, and reduces the assembly difficulty of the first insulating member.

Optionally, a part of the first adapter portion is deformed to define the first accommodating groove; and/or a part of the second adapter portion is deformed to define the second accommodating groove. This processing mode reduces molding difficulty of the first accommodating groove and/or the second accommodating groove.

Optionally, the first intermediate portion protrudes away from the second intermediate portion, to form a first accommodating groove for accommodating the first insulating member between the first intermediate portion and the second intermediate portion. That is, the first accommodating groove for accommodating the first insulating member is directly provided on the first intermediate portion, so that the first insulating member can be effectively disposed between the first intermediate portion and the second intermediate portion, and grooving processing on the second intermediate portion can be avoided to a certain extent, the molding difficulty of the accommodating groove is reduced, and the assembly difficulty of the first insulating member is further reduced.

Optionally, a groove depth of the first accommodating groove is greater than a thickness of the first insulating member. This ensures that the first insulating member can be perfectly embedded in the first accommodating groove, facilitates disposing the first insulating member between the first intermediate portion and the second intermediate portion, enables the first accommodating groove to fix the first insulating member in position, and improves the positional stability of the first insulating member.

Optionally, a groove depth of the first accommodating groove is equal to a thickness of the first insulating member. Under this design, the first insulating member can be perfectly embedded in the first accommodating groove, and the second intermediate portion can be directly covered over the first accommodating groove during assembly. This avoids forming a clearance groove on the second intermediate portion to a certain extent to avoid the first insulating member or arrange a matching protrusion embedded into the first accommodating groove on the second intermediate portion, reduces the molding difficulty of the second intermediate portion, and ensures the flatness of the surface of the second intermediate portion to a certain extent.

Optionally, the thickness of the first insulating member is 0.3 mm to 0.7 mm. This further ensures the insulating performance of the first insulating member to a certain extent, and reduces the material cost of the first insulating member.

Optionally, the thickness of the first insulating member is 0.5 mm to 0.6 mm. This further ensures the insulating performance of the first insulating member to a certain extent, and reduces the material cost of the first insulating member.

Optionally, the adapter further includes a second insulating member, where the second insulating member is disposed between the first connection end and the third connection end. This structure achieves an insulating fit between the first connection end and the third connection end, prevents electrical connection between the first connection end and the third connection end to a certain extent, further prevents electrical connection between the first adapter portion and the second adapter portion to a certain extent, and ensures the working performance and service reliability of the battery cell to a certain extent.

Optionally, at least one of the first connection end and the third connection end is provided with a second positioning structure for positioning the second insulating member. The second positioning structure can position the second insulating member and improve the positional stability of the second insulating member, so that the second insulating member can be stably disposed between the first connection end and the third connection end. This can prevent electrical connection between the first connection end and the third connection end to a certain extent, and can also reduce the positioning difficulty of the second insulating member.

Optionally, the second positioning structure is a positioning hole, and a part of the second insulating member is accommodated in the second positioning structure. This achieves the positioning fit between the second positioning structure and the second insulating member, facilitates positioning of the second insulating member through the second positioning structure, improves the positional stability of the second insulating member, and reduces the positioning difficulty of the second insulating member.

Optionally, the second insulating member is provided with a limiting groove opening toward the first connection end and/or the third connection end, and at least part of the first connection end and/or the third connection end is fitted into the limiting groove. This improves the fitting strength between the second insulating member and the first adapter portion and the second adapter portion, and enables the first adapter portion and the second adapter portion to cooperatively limit the position of the second insulating member. Positional offset of the second insulating member in the axial direction of the battery cell is avoided to a certain extent, the positional stability of the second insulating member is enhanced, and the working performance of the second insulating member is ensured to a certain extent.

Optionally, the second insulating member is provided with a positioning hole aligned with the center hole of the electrode assembly. On one hand, the positioning hole can serve a positioning role during installation of the adapter, so as to reduce the assembly difficulty of the adapter; on the other hand, when the battery cell suffers thermal runaway, the positioning role can also perform a venting function, so as to improve the service reliability of the battery cell.

Optionally, the battery cell is a cylindrical battery. This arrangement ensures the working performance and service reliability of the battery cell to a certain extent.

In a second aspect, this application provides a battery pack, including a plurality of the battery cells described in the above embodiments.

In the technical solution of the embodiments of this application, by adopting the battery cell described in the above embodiments, the adapter described in the above embodiments is achieved, so as to ensure the working performance of the battery pack to a certain extent.

In a third aspect, this application provides an electric device, including the battery pack described in the above embodiments, where the battery pack is configured to provide electric energy.

In the technical solution of the embodiments of this application, by adopting the battery pack described in the above embodiments, the working performance of the electric device can be effectively ensured to a certain extent.

Additional aspects and advantages of this application will be partially given in the following description, partially become apparent from the following description, or be learned through practice of this application.

### BRIEF DESCRIPTION OF DRAWINGS

In order to more clearly illustrate the technical solutions of the embodiments of this application, the accompanying drawings to be used in the embodiments will be briefly introduced below. It should be understood that the following drawings only illustrate some embodiments of this application and therefore should not be regarded as limiting the scope. For those of ordinary skill in the art, other related drawings can also be obtained based on these drawings without creative effort.
FIG. 1 is a schematic diagram of an electric device according to some embodiments of this application.
FIG. 2 is an exploded view of a battery pack according to some embodiments of this application.
FIG. 3 is an exploded view of a battery cell according to some embodiments of this application.
FIG. 4 is an exploded view between an end cap and an adapter according to some embodiments of this application.
FIG. 5 is a schematic diagram of an adapter before bending according to some embodiments of this application.
FIG. 6 is an exploded view of an adapter before bending according to some embodiments of this application.
FIG. 7 is a top view of an adapter before bending according to some embodiments of this application.
FIG. 8 is a cross-sectional view taken along line A-A of FIG. 7.
FIG. 9 is a schematic diagram of an adapter after bending according to some embodiments of this application.
FIG. 10 is an exploded view of an adapter after bending according to some embodiments of this application.

### Reference signs in drawings:

1000: electric device; 100: adapter; 110: first adapter portion; 111: first connection end; 112: second connection end; 1121: first connection hole; 113: first intermediate portion; 1131: first protruding portion; 1132: first accommodating groove; 120: second adapter portion; 121: third connection end; 122: fourth connection end; 1221: second connection hole; 123: second intermediate portion; 1231: second protruding portion; 130: first insulating member; 140: second insulating member; 141: positioning hole; 150: first positioning structure; 160: second positioning structure; 500: battery cell; 510: casing; 511: first electrode terminal; 512: second electrode terminal; 513: accommodating cavity; 514: end cap; 5141: upper plastic; 5142: top cover plate; 5143: lower plastic; 5144: first pole; 5145: second pole; 520: electrode assembly; 521: first tab; 522: second tab; 530: blue film; 200: controller; 300: motor; 400: battery pack; 410: box; 411: first box; and 412: second box.

### DESCRIPTION OF EMBODIMENTS

In order to make the objectives, technical solutions, and advantages of the embodiments of this application clearer, the technical solutions in the embodiments of this application will be clearly described below with reference to the drawings in the embodiments of this application. Obviously, the described embodiments are some embodiments of this application, rather than all embodiments. Based on the embodiments in this application, all other embodiments obtained by those of ordinary skill in the art without creative effort shall fall within the protection scope of this application.

Unless otherwise defined, all technical and scientific terms used in this application have the same meanings as commonly understood by those of ordinary skill in the technical field to which this application belongs. The terms used in the specification of this application in this application are only for the purpose of describing specific embodiments and are not intended to limit this application. The terms "including" and "having" and any variations thereof in the specification and claims of this application and the above description of accompanying drawings are intended to cover non-exclusive inclusions. The terms "first", "second", and the like in the specification and claims of this application or the above drawings are used to distinguish different objects, rather than to describe a specific order or primary-secondary relationship.

References to "embodiments" in this application mean that specific features, structures, or characteristics described in conjunction with the embodiments can be included in at least one embodiment of this application. The phrase appearing in various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

In the description of this application, it should be noted that, unless otherwise clearly specified and limited, the terms "mounting", "connection", "coupling", and "attachment" should be understood in a broad sense, for example, it may be a fixed connection, a detachable connection, or an integral connection; it may be a direct connection or an indirect connection through an intermediary; or it may be the internal communication of two elements. For those of ordinary skill in the art, the specific meanings of the above terms in this application can be understood according to specific circumstances.

The term "and/or" in this application is merely an association describing associated objects, indicating that three relationships may exist, for example, A and/or B may indicate: A exists alone, both A and B exist, B exists alone. In addition, the character "/" in this application generally indicates that the associated objects before and after are in an "or" relationship.

In the embodiments of this application, the same reference signs indicate the same components, and for brevity, detailed descriptions of the same components in different embodiments are omitted. It should be understood that the thicknesses, lengths, and widths of various components in the embodiments of this application shown in the accompanying drawings, as well as the overall thicknesses, lengths, and widths of integrated devices, are merely illustrative and should not constitute any limitation on this application.

"A plurality of" appearing in this application refers to two or more (including two).

In this application, the battery cell may include lithium-ion secondary batteries, lithium-ion primary batteries, lithium-sulfur batteries, sodium-lithium ion batteries, sodium-ion batteries, magnesium-ion batteries, or the like, and the embodiments of this application are not limited thereto. The battery cell may be in the form of a cylinder, a flat body, a rectangular body, or other shapes, and the embodiments of this application are not limited thereto. Battery cells are generally divided into three types according to packaging methods: cylindrical battery cells, prismatic battery cells, and pouch battery cells, and the embodiments of this application are not limited thereto.

The battery mentioned in the embodiments of this application refers to a single physical module that includes a plurality of battery cells to provide higher voltage and capacity. For example, the battery mentioned in this application may be a battery module, a battery pack, or the like. A battery module generally includes a plurality of battery cells. A battery generally includes a box for packaging a plurality of battery cells or a plurality of battery modules, and the box can prevent liquids or other foreign objects from affecting the charging or discharging of the battery cells; certainly, the battery may also not include a box.

Exemplarily, a battery cell may generally include a housing, a cell assembly, and an electrolyte, where the housing is configured to accommodate the cell assembly and the electrolyte, the housing is provided with at least one positive electrode pole and at least one negative electrode pole, the cell assembly includes one or more electrode assemblies, and the electrode assembly is formed by stacking or winding a positive electrode sheet, a negative electrode sheet, and a separator.

The positive electrode sheet may generally include a positive electrode current collector and a positive electrode active material layer, where the positive electrode active material layer is directly or indirectly coated on the positive electrode current collector, and a plurality of positive electrode tab sheets are stacked together and forming an electrical connection with the positive electrode pole. Exemplarily, a plurality of positive electrode tab sheets stacked together may be directly welded to the positive electrode pole to form an electrical connection; alternatively, the cell assembly may further include a positive electrode adapter sheet, a plurality of positive electrode tab sheets stacked together are welded to one end of the positive electrode adapter sheet, and another end of the positive electrode adapter sheet is welded to the positive electrode pole, so that the positive electrode tab sheets form an electrical connection with the positive electrode pole.

The negative electrode sheet may generally include a negative electrode current collector and a negative electrode active material layer, where the negative electrode active material layer is directly or indirectly coated on the negative electrode current collector, and a plurality of negative electrode tab sheets are stacked together and forming an electrical connection with the negative electrode pole. Exemplarily, a plurality of negative electrode tab sheets stacked together may be directly welded to the negative electrode pole to form an electrical connection; alternatively, the cell assembly may further include a negative electrode adapter sheet, a plurality of negative electrode tab sheets stacked together are welded to one end of the negative electrode adapter sheet, and another end of the negative electrode adapter sheet is welded to the negative electrode pole, so that the negative electrode tab sheets form an electrical connection with the negative electrode pole. The material of the separator is not limited, for example, it may be polypropylene, polyethylene, or the like.

At present, from the development of the market situation, the application of batteries is becoming increasingly more widespread. Batteries are not only applied to energy storage power systems such as hydropower, thermal power, wind power, and solar power stations, but also widely applied to electric bicycles, electric motorcycles, electric vehicles, and other electric vehicles, as well as military equipment, aerospace, and other fields.

With the continuous expansion of battery application fields, the market demand is also continuously increasing.

In the manufacturing process of batteries, in order to reduce the volume of the battery, increase the energy density of the battery, or facilitate electrical connection between multiple batteries, the positive electrode tab and the negative electrode tab of the battery are usually provided on the same side, that is, the positive electrode and the negative electrode of the battery are led out from the same side.

However, when an existing battery adopts the same-side lead-out of the positive electrode and the negative electrode, current passing areas of a positive electrode current collecting disc and a negative electrode current collecting disc are relatively small, which causes relatively large resistance, fails to achieve high-power current passing, and affects the service performance of the battery.

In order to solve the above problems, the embodiments of this application provide a battery cell 500 that can satisfy the same-side lead-out of positive and negative electrodes of the battery and has a sufficiently large current passing area. The specific solution is that at least part of the first adapter portion 110 and at least part of the second adapter portion 120 in an overlapping manner in the axial direction of the battery cell 500, so as to ensure the current passing areas of the first adapter portion 110 and the second adapter portion 120 to a certain extent, thereby improving the current passing capabilities of the first adapter portion 110 and the second adapter portion 120, that is, raising the current passing capability of the adapter 100. This ensures the working performance of the battery cell 500 to a certain extent, and solves the technical problem in the prior art that when the positive electrode and the negative electrode of the battery are led out from the same side, the current collecting disc has a small current passing area and poor current passing capability.

The embodiments of this application provide an electric device using the battery disclosed herein as a power source, and the electric device may be, but is not limited to, a mobile phone, a tablet, a notebook computer, an electric toy, an electric tool, an electric bicycle, an electric vehicle, a ship, and a spacecraft. The electric toy may include a fixed or mobile electric toy, such as a game console, an electric vehicle toy, an electric ship toy, and an electric aircraft toy. The spacecraft may include an airplane, a rocket, a space shuttle, a spaceship, and the like. The electric tool includes a metal cutting power tool, a grinding power tool, an assembly power tool, and a railway power tool, such as an electric drill, an electric grinder, an electric wrench, an electric screwdriver, an electric hammer, an impact drill, a concrete vibrator, and an electric planer.

The following embodiments are for convenience of explanation, taking the electric device 1000 as a vehicle as an example, to introduce the structures of the electric device 1000, the battery pack 400, and the battery cell 500 of this application in detail.

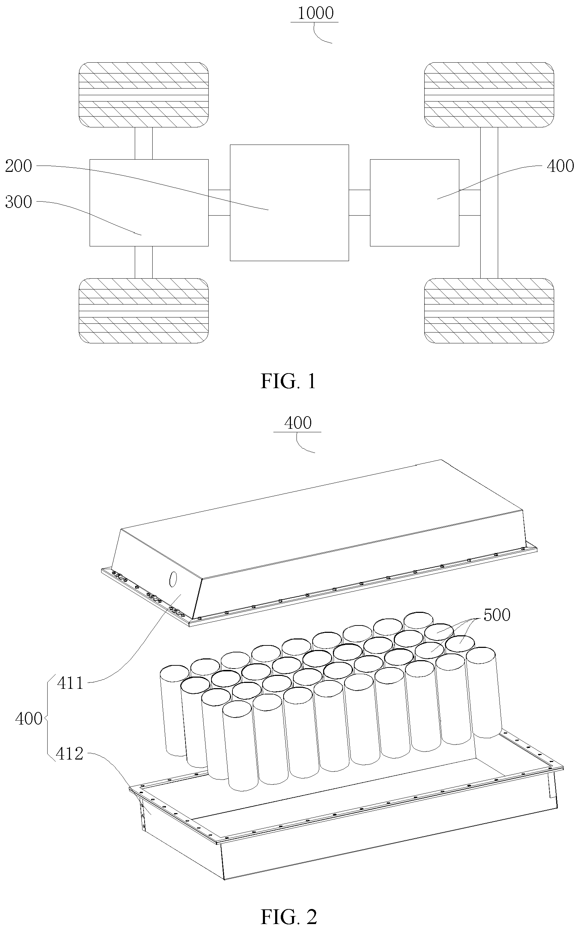

Referring to FIG. 1, FIG. 1 is a structural schematic diagram of an electric device 1000 provided as a vehicle according to some embodiments of this application. The vehicle may be a fuel vehicle, a gas vehicle, or a new energy vehicle, and the new energy vehicle may be a battery electric vehicle, a hybrid electric vehicle, an extended-range electric vehicle, or the like. The vehicle is provided with a battery pack 400, and the battery pack 400 may be provided at the bottom, the front part, or the rear part of the vehicle. The battery pack 400 may be used for power supply of the vehicle, for example, the battery pack 400 may serve as an operating power source of the vehicle. The vehicle may further include a controller 200 and a motor 300, and the controller 200 is configured to control the battery pack 400 to supply power to the motor 300, for example, for power needs during starting, navigation, and driving of the vehicle.

In some embodiments of this application, the battery pack 400 can not only serve as an operating power source of the vehicle, but also as a driving power source of the vehicle, replacing or partially replacing fuel or natural gas to provide driving power for the vehicle.

Referring to FIG. 2, FIG. 2 is a structural exploded view of a battery cell 500 used in a battery pack 400 according to some embodiments of this application. The battery pack 400 includes a box 410 and a plurality of battery cells 500, where the battery cells 500 are accommodated in the box 410. The box 410 is configured to provide an assembly space for the battery cells 500, and the box 410 may adopt a variety of structures.

In some other embodiments of this application, the battery pack 400 may also not include the box 410, but only include a plurality of battery cells 500, which will not be repeated herein.

In some embodiments, the box 410 may include a first box 411 and a second box 412, where the first box 411 and the second box 412 are covered with each other, and the first box 411 and the second box 412 together define an accommodating cavity for accommodating the battery cells. The second box 412 may be a hollow structure with one end open, the first box 411 may be a plate-like structure, and the first box 411 is covered on the open side of the second box 412, so that the first box 411 and the second box 412 together define the accommodating cavity; alternatively, the first box 411 and the second box 412 may both be hollow structures open on one side (as shown in FIG. 2), and the open side of the first box 411 is covered on the open side of the second box 412. Certainly, the box 410 formed by the first box 411 and the second box 412 may be in a variety of shapes, such as a cylinder or a rectangular body.

In the battery pack 400, a plurality of battery cells 500 may be connected in series, in parallel, or in a series-parallel combination, where the series-parallel combination means that the plurality of battery cells 500 are connected both in series and in parallel. A plurality of battery cells 500 may be directly connected in series, in parallel, or in a series-parallel combination, and then the integral structure formed by the plurality of battery cells 500 is accommodated in the box 410; alternatively, the battery pack 400 may also be such that a plurality of battery cells 500 are first connected in series, in parallel, or in a series-parallel combination to form a battery module, and then a plurality of battery modules are connected in series, in parallel, or in a series-parallel combination to form an integral structure, and accommodated in the box 410. The battery pack 400 may further include other structures, for example, the battery pack 400 may further include a busbar for achieving electrical connection between a plurality of battery cells 500.

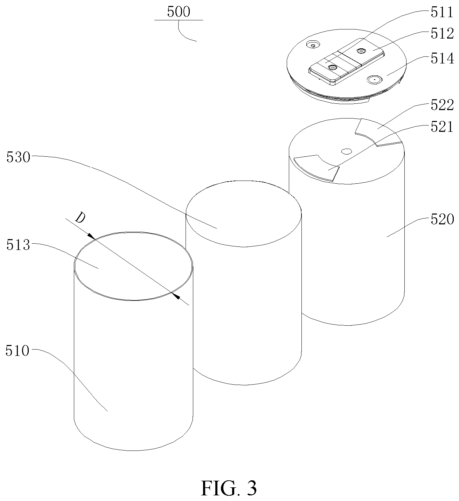

Referring to FIG. 3, FIG. 3 is a structural schematic diagram of a battery cell 500 according to some embodiments of this application. The battery cell is in a cylindrical shape, and an axial direction of the battery cell is an axial direction of the electrode assembly. In other embodiments of this application, the battery cell may also be in a rectangular body, a multi-prism body, a flat body, or other shapes.

The battery cell 500 according to embodiments of this application will be described below with reference to the accompanying drawings of the specification.

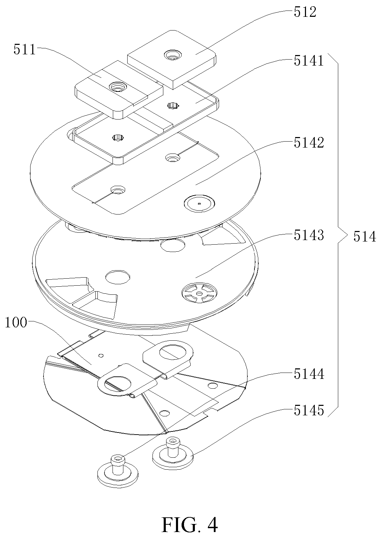

As shown in FIG. 3 and FIG. 4, the battery cell 500 according to embodiments of this application includes a casing 510, an electrode assembly 520, and an adapter 100.

As shown in FIG. 3, the casing 510 is provided with a first electrode terminal 511 and a second electrode terminal 512, the electrode assembly 520 includes a first tab 521 and a second tab 522, and the first tab 521 and the second tab 522 have opposite polarities.

In some embodiments, the first tab 521 is formed as a positive electrode tab, and the second tab 522 is formed as a negative electrode tab; or the first tab 521 is formed as a negative electrode tab, and the second tab 522 is formed as a positive electrode tab. In this way, the first tab 521 and the second tab 522 have opposite polarities, thereby ensuring the working performance of the battery cell 500 to a certain extent.

As shown in FIG. 3, FIG. 4, and FIG. 5, the adapter 100 is disposed between the electrode assembly 520 and the casing 510 and includes a first adapter portion 110 and a second adapter portion 120, where the first adapter portion 110 is electrically connected to the first electrode terminal 511 and the first tab 521, the second adapter portion 120 is electrically connected to the second electrode terminal 512 and the second tab 522, and at least part of the first adapter portion 110 and at least part of the second adapter portion 120 are arranged in an overlapping manner in the axial direction of the battery cell 500. This arrangement achieves electrical connection between the electrode assembly 520 and the first electrode terminal 511 and the second electrode terminal 512, facilitates leading out the current of the electrode assembly 520 through the first electrode terminal 511 and the second electrode terminal 512, and ensures the working performance of the battery cell 500 to a certain extent.

At the same time, by arranging at least part of the first adapter portion 110 and at least part of the second adapter portion 120 in an overlapping manner in the axial direction of the battery cell 500, the areas of the first adapter portion 110 and the second adapter portion 120 can be ensured to a certain extent. This achieves an increase in the current passing areas of the first adapter portion 110 and the second adapter portion 120, improves the current passing capabilities of the first adapter portion 110 and the second adapter portion 120, that is, raises the current passing capability of the adapter 100, achieves high-power current passing, and optimizes the working performance of the battery cell 500.

It can be seen from the above structure that in the battery cell 500 of this application, at least part of the first adapter portion 110 and at least part of the second adapter portion 120 are arranged in an overlapping manner in the axial direction of the battery cell 500, to achieve the objective of widening the first adapter portion 110 and the second adapter portion 120, thereby improving the current passing capabilities of the first adapter portion 110 and the second adapter portion 120, achieving high-power current passing, and optimizing the working performance of the battery cell 500.

It can be understood that, compared with the prior art, this application widens the first adapter portion 110 and the second adapter portion 120 to improve the current passing capabilities of the first adapter portion 110 and the second adapter portion 120, thereby improving the current passing capability of the adapter 100, ensuring the current passing effect to a certain extent, and facilitating high-power current passing.

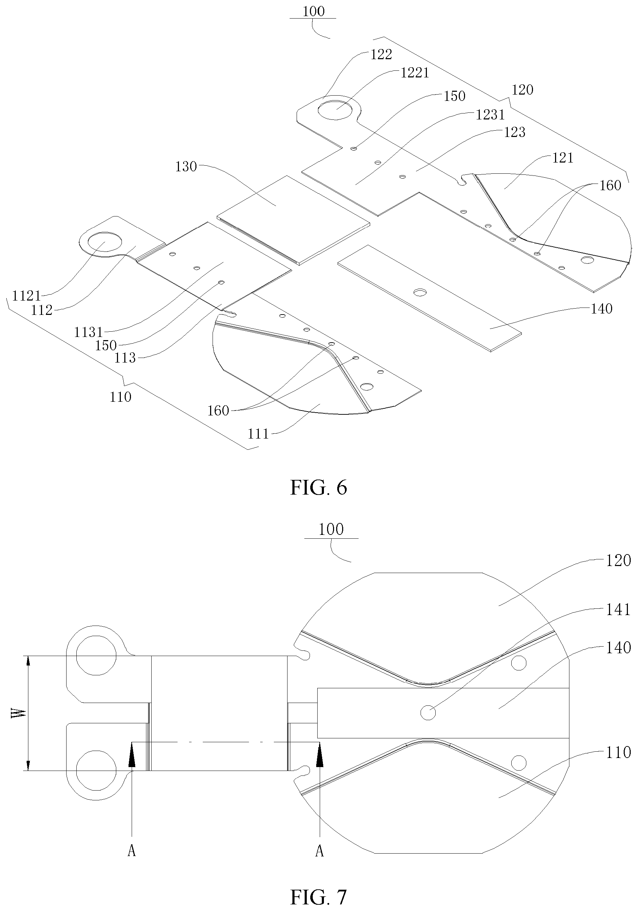

In some embodiments, as shown in FIG. 4 and FIG. 6, the first adapter portion 110 includes a first connection end 111, a second connection end 112, and a first intermediate portion 113, where the first connection end 111 is electrically connected to the first tab 521, the second connection end 112 is electrically connected to the first electrode terminal 511, and the first intermediate portion 113 is electrically connected to the first connection end 111 and the second connection end 112. Such arrangement achieves electrical connection between the first tab 521 and the first electrode terminal 511, and reduces the electrical connection difficulty between the first tab 521 and the first electrode terminal 511.

In some embodiments, the first adapter portion 110 is formed as a positive adapter portion, the first connection end 111 of the first adapter portion 110 is configured to be electrically connected to the first tab 521 of the battery cell 500, and the second connection end 112 of the first adapter portion 110 is configured to be electrically connected to the first electrode terminal 511 of the battery cell 500. In this way, after the first intermediate portion 113 is electrically connected to the first connection end 111 and the second connection end 112, electrical connection between the positive electrode tab and the positive electrode terminal can be achieved, which facilitates leading out the current of the battery cell 500 through the positive electrode terminal, and reduces the connection difficulty between the positive electrode tab and the positive electrode terminal of the battery cell 500.

In some embodiments, the first connection end 111, the second connection end 112, and the first intermediate portion 113 are formed as an integral component, so that while achieving electrical connection of the first intermediate portion 113 with the first connection end 111 and the second connection end 112, this structure can reduce the connection difficulty between the first intermediate portion 113 and the first connection end 111 and the second connection end 112, and ensure the connection quality to a certain extent.

In some embodiments, as shown in FIG. 4 and FIG. 6, the second adapter portion 120 includes a third connection end 121, a fourth connection end 122, and a second intermediate portion 123, where the third connection end 121 is electrically connected to the second tab 522, the fourth connection end 122 is electrically connected to the second electrode terminal 512, and the second intermediate portion 123 is electrically connected to the third connection end 121 and the fourth connection end 122. Such arrangement achieves electrical connection between the second tab 522 and the second electrode terminal 512, and reduces the electrical connection difficulty between the second tab 522 and the second electrode terminal 512.

In some embodiments, the second adapter portion 120 is formed as a negative adapter portion, the third connection end 121 of the second adapter portion 120 is configured to be electrically connected to the second tab 522 of the battery cell 500, and the fourth connection end 122 of the second adapter portion 120 is configured to be electrically connected to the second electrode terminal 512 of the battery cell 500. In this way, after the second intermediate portion 123 is electrically connected to the third connection end 121 and the fourth connection end 122, electrical connection between the negative electrode tab and the negative electrode terminal can be achieved, which facilitates leading out the current of the battery cell 500 through the negative electrode terminal, and reduces the connection difficulty between the negative electrode tab and the negative electrode terminal of the battery cell 500.

In some embodiments, the third connection end 121, the fourth connection end 122, and the second intermediate portion 123 are formed as an integral component, so that while achieving electrical connection of the second intermediate portion 123 with the third connection end 121 and the fourth connection end 122 separately, this structure reduces the connection difficulty between the second intermediate portion 123 and the third connection end 121 and the fourth connection end 122, and ensures the connection quality to a certain extent.

It should be noted that the above description is mainly described by taking the first adapter portion 110 formed as a positive adapter portion and the second adapter portion 120 formed as a negative adapter portion. In some other embodiments, the first adapter portion 110 may be formed as a negative adapter portion, and the second adapter portion 120 may be formed as a positive adapter portion.

When the first adapter portion 110 is formed as a negative adapter portion, the first adapter portion 110 is configured to be connected to the negative electrode tab and the negative electrode terminal of the battery cell 500; when the second adapter portion 120 is formed as a positive adapter portion, the second adapter portion 120 is configured to be connected to the positive electrode tab and the positive electrode terminal of the battery cell 500. Such arrangement can achieve both electrical connection between the negative electrode tab and the negative electrode terminal of the battery cell 500 and electrical connection between the positive electrode tab and the positive electrode terminal of the battery cell 500, and facilitate leading out the current of the battery cell 500.

In some embodiments, the first adapter portion 110 is a copper adapter portion; and the second adapter portion 120 is an aluminum adapter portion. By adopting such material matching, the first adapter portion 110 and the second adapter portion 120 can cooperate to achieve electrical connection between the positive electrode of the electrode assembly 520 and the positive electrode terminal of the casing 510, and electrical connection between the negative electrode of the electrode assembly 520 and the negative electrode terminal of the casing 510 respectively, so as to ensure the working performance of the battery cell 500 to a certain extent.

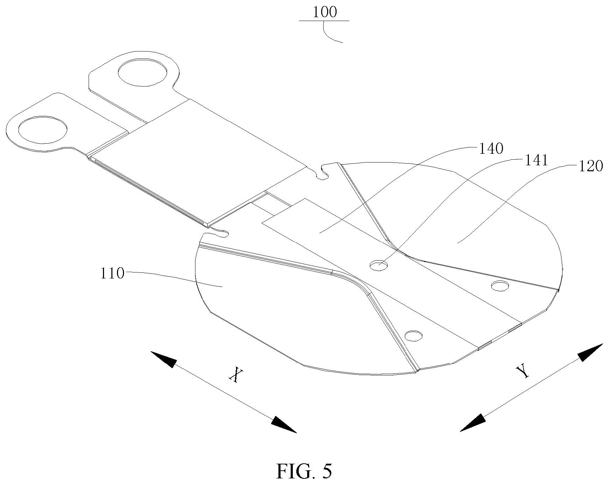

In some embodiments, as shown in FIG. 5 and FIG. 6, in a first direction, the first connection end 111 and the third connection end 121 are spaced apart from each other, the second connection end 112 and the fourth connection end 122 are spaced apart from each other, the first intermediate portion 113 and the second intermediate portion 123 are arranged in an overlapping manner in the axial direction of the battery cell 500, and the first direction intersects the axial direction. The first direction mentioned herein can be understood as direction Y of the battery cell 500 shown in FIG. 5, that is, a width direction of the adapter 100. By arranging the first connection end 111 and the third connection end 121 to be spaced apart in the first direction, and arranging the second connection end 112 and the fourth connection end 122 to be spaced apart in the first direction, electrical connection between the first adapter portion 110 and the second adapter portion 120 can be avoided to a certain extent, so as to ensure the service reliability of the battery cell 500 to a certain extent.

It should be noted that direction X shown in FIG. 5 can be understood as a length direction of the adapter 100 before bending.

In some embodiments, as shown in FIG. 5 and FIG. 6, the first intermediate portion 113 includes a first protruding portion 1131, the first protruding portion 1131 protruding from the first connection end 111 toward the second adapter portion 120; and/or the second intermediate portion 123 includes a second protruding portion 1231, the second protruding portion 1231 protruding from the third connection end 121 toward the first adapter portion 110. This means that a protruding portion may be provided on one of the first intermediate portion 113 and the second intermediate portion 123, or protruding portions may be provided on both the first intermediate portion 113 and the second intermediate portion 123.

When a protruding portion is provided on the first intermediate portion 113, the protruding portion is formed as the first protruding portion 1131, and the first protruding portion 1131 protrudes from the first connection end 111 toward the second adapter portion 120, so as to ensure the protruding area of the first protruding portion 1131 to a certain extent, thereby achieving an increase in the current passing area of the first intermediate portion 113 and improving the current passing capability of the first adapter portion 110; and when a protruding portion is provided on the second intermediate portion 123, the protruding portion is formed as the second protruding portion 1231, and the second protruding portion 1231 protrudes from the third connection end 121 toward the first adapter portion 110, so as to ensure the protruding area of the second protruding portion 1231 to a certain extent, thereby achieving an increase in the current passing area of the second intermediate portion 123 and improving the current passing capability of the second adapter portion 120.

That is, this application ensures the current passing area of the adapter 100 to a certain extent by providing the first protruding portion 1131 on the first intermediate portion 113, and/or by providing the second protruding portion 1231 on the second intermediate portion 123, thereby improving the current passing capability of the adapter 100, achieving high-power current passing, and improving the working performance of the battery cell 500.

In some embodiments, as shown in FIG. 6, the first intermediate portion 113 and the second intermediate portion 123 each are provided with a protruding portion, that is, the first intermediate portion 113 is provided with a first protruding portion 1131 protruding toward the second adapter portion 120 and protruding from the first connection end 111, and the second intermediate portion 123 is provided with a second protruding portion 1231 protruding toward the first adapter portion 110 and protruding from the third connection end 121. This arrangement can achieve simultaneous widening of the first intermediate portion 113 and the second intermediate portion 123, ensure the current passing areas of the first intermediate portion 113 and the second intermediate portion 123 to a certain extent, and accordingly improve the current passing capabilities of the first intermediate portion 113 and the second intermediate portion 123.

Optionally, the first protruding portion 1131 is integrally formed with the first intermediate portion 113. That is, the first protruding portion 1131 and the first intermediate portion 113 are formed as an integral component, so as to ensure the connection strength between the first protruding portion 1131 and the first intermediate portion 113 to a certain extent, and improve the positional stability of the first protruding portion 1131. This further ensures that the first protruding portion 1131 can effectively increase the current passing area of the first intermediate portion 113, and also omits the connection step between the first protruding portion 1131 and the first intermediate portion 113, and reduces the connection difficulty between the first protruding portion 1131 and the first intermediate portion 113.

Optionally, the second protruding portion 1231 is integrally formed with the second intermediate portion 123. For beneficial effects brought by this structure, reference may be made to the beneficial effects produced by the first protruding portion 1131 being integrally formed with the first intermediate portion 113, and details are not repeated herein.

In some embodiments, as shown in FIG. 5, FIG. 7, and FIG. 8, the first intermediate portion 113 and the second intermediate portion 123 are arranged in an overlapping manner in the axial direction of the battery cell 500. The overlapping arrangement mentioned herein can be understood as that the first connection end 111 and the third connection end 121 as well as the second connection end 112 and the fourth connection end 122 are spaced apart in the left-right direction, and the first protruding portion 1131 and the second protruding portion 1231 overlap in the up-down direction. This structure can avoid mutual interference between the first protruding portion 1131 and the second protruding portion 1231 during protrusion to a certain extent, so as to ensure that the first protruding portion 1131 and the second protruding portion 1231 have a sufficiently large protruding area to a certain extent, and further improve the current passing capabilities of the first adapter portion 110 and the second adapter portion 120.

In some embodiments, as shown in FIG. 6, the first protruding portion 1131 and the second protruding portion 1231 protrude toward directions close to each other and are arranged in an overlapping manner, so as to ensure that the first protruding portion 1131 and the second protruding portion 1231 have sufficiently large protruding areas to a certain extent.

Moreover, arranging the first protruding portion 1131 and the second protruding portion 1231 to protrude toward directions close to each other can also prevent the occupied space of the adapter 100 from increasing to a certain extent, and reduces the assembly difficulty of the adapter 100.

In some embodiments, a protruding length of the first protruding portion 1131 does not exceed the second intermediate portion 123, and a protruding length of the second protruding portion 1231 does not exceed the first intermediate portion 113. On the premise of ensuring the current passing areas of the first intermediate portion 123 and the second intermediate portion 113 to a certain extent, this arrangement can prevent, to a certain extent, the first protruding portion 1131 exceeding the second protruding portion 1231 and being electrically connected to the second adapter portion 120, the second electrode terminal 512, and/or the second tab 522, and can also prevent, to a certain extent, the second protruding portion 1231 exceeding the first protruding portion 1131 and being electrically connected to the first adapter portion 110, the first electrode terminal 511, and/or the first tab 521, thereby ensuring the working performance of the battery cell 500 to a certain extent.

In some embodiments, as shown in FIG. 3 and FIG. 7, a width of the first intermediate portion 113 and/or the second intermediate portion 123 in the first direction is w, and a diameter of the battery cell 500 is D, where 3 mm ≤ w ≤ D - 2 mm. That is, the width of the first intermediate portion 113 and/or the second intermediate portion 123 in direction Y is w. The diameter D of the battery cell 500 mentioned herein can be understood as the diameter of the casing 510. In some examples, when the casing 510 has a certain thickness, D refers to the maximum outer diameter of the casing 510. When the width w of the first intermediate portion 113 and/or the second intermediate portion 123 in the first direction is less than 3 mm, the current passing area of the first intermediate portion 113 and/or the second intermediate portion 123 is reduced, which affects the current passing capability of the first intermediate portion 113 and/or the second intermediate portion 123; and when the width w of the first intermediate portion 113 and/or the second intermediate portion 123 in the first direction is greater than D - 2 mm, the manufacturing cost of the first intermediate portion 113 and/or the second intermediate portion 123 is increased, and there is also a risk that the first intermediate portion 113 and/or the second intermediate portion 123 exceeds the casing 510 of the battery cell 500 and is electrically connected to other structural members, which affects the working performance of the battery cell 500.

Therefore, this application sets the width w of the first intermediate portion 113 and/or the second intermediate portion 123 in the first direction to be greater than or equal to 3 mm or less than or equal to D - 2 mm, so that while ensuring the areas of the first intermediate portion 113 and the second intermediate portion 123 to a certain extent, this arrangement can reduce the material cost of the first intermediate portion 113 and the second intermediate portion 123, and prevent the first intermediate portion 113 and the second intermediate portion 123 from exceeding the casing 510 of the battery cell 500 and being electrically connected to other structural members to a certain extent, so as to ensure the working performance of the battery cell 500 to a certain extent.

In some embodiments, 6 mm ≤ w ≤ D - 4 mm. In this way, while ensuring the areas of the first intermediate portion 113 and the second intermediate portion 123 to a certain extent, this arrangement can reduce the material cost of the first intermediate portion 113 and the second intermediate portion 123, and prevents the first intermediate portion 113 and the second intermediate portion 123 from exceeding the battery cell 500 and being electrically connected to other structural members to a certain extent, so as to ensure the working performance of the battery cell 500 to a certain extent.

In some embodiments, in direction Y of the battery cell 500, the first intermediate portion 113 and the second intermediate portion 123 are provided close to the middle of the battery cell 500, so that side walls of both the first intermediate portion 113 and the second intermediate portion 123 in direction Y are spaced apart from each other from the side wall of the battery cell 500, and the spacing is 2 mm, thereby making the width w of the first intermediate portion 113 and the second intermediate portion 123 in the first direction D - 4 mm, ensuring the areas of the first intermediate portion 113 and the second intermediate portion 123 to a certain extent, and preventing the first intermediate portion 113 and the second intermediate portion 123 from extending to the outside of the battery cell 500 to a certain extent.

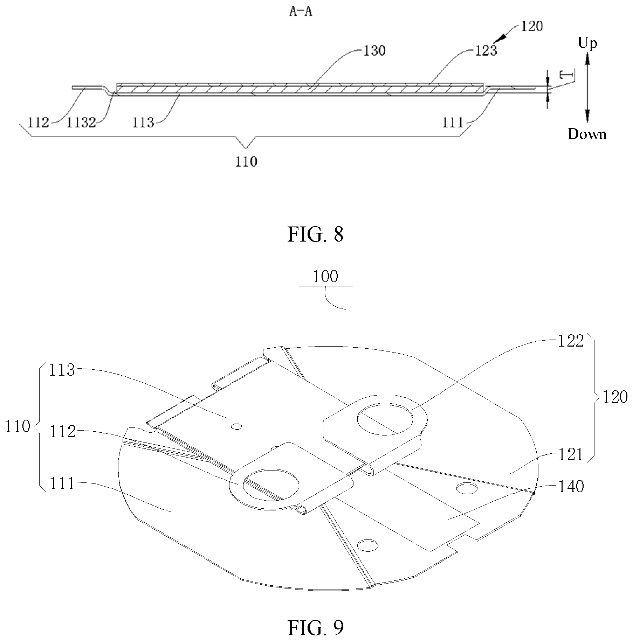

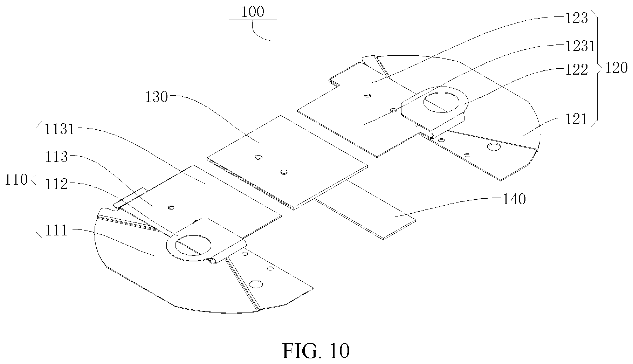

In some embodiments, as shown in FIG. 4, FIG. 9, and FIG. 10, the first adapter portion 110 is formed as a bent member, the first connection end 111, the first intermediate portion 113, and the second connection end 112 are stacked in a second direction, and the second direction intersects the first direction. That is, the first adapter portion 110 of this application is formed as a bent member. After the first adapter portion 110 is formed as a bent member, the first connection end 111, the first intermediate portion 113, and the second connection end 112 of the first adapter portion 110 are stacked in the second direction. The second direction mentioned herein can be understood as a height direction of the first adapter portion 110, that is, the up-down direction shown in FIG. 8. This facilitates connection of two structural members (such as the first tab 521 and the first electrode terminal 511) spaced apart in the second direction through the first adapter portion 110, and reduces the connection difficulty between the first tab 521 and the first electrode terminal 511 spaced apart in the second direction.

Moreover, after the first adapter portion 110 is bent, the dimension of the first adapter portion 110 in the length direction can also be reduced. This reduces the dimension of the battery cell 500 in the radial direction and reduces the assembly difficulty of the battery cell 500.

Optionally, as shown in FIG. 4, FIG. 9, and FIG. 10, the second adapter portion 120 is formed as a bent member, and the third connection end 121, the second intermediate portion 123, and the fourth connection end 122 are stacked in the second direction. That is, the second adapter portion 120 may also be formed as a bent member. After the second adapter portion 120 is formed as a bent member, the third connection end 121, the second intermediate portion 123, and the fourth connection end 122 of the second adapter portion 120 are stacked in the second direction. This facilitates connection of two structural members (such as the second tab 522 and the second electrode terminal 512) spaced apart in the second direction through the second adapter portion 120, and reduces the connection difficulty between the second tab 522 and the second electrode terminal 512 spaced apart in the second direction.

In summary, the adapter 100 of this application is formed as a bent member.

It should be noted that the battery cell 500 of this application may be in a cylindrical shape, a flat body, a rectangular body, or other shapes, and the embodiments of this application are not limited thereto. For ease of description, a battery in a cylindrical shape is taken as an example in the following embodiments.

In some embodiments, as shown in FIG. 3, the battery cell 500 is a cylindrical battery. This arrangement ensures the working performance and service reliability of the battery cell to a certain extent.

In some embodiments, as shown in FIG. 3, an accommodating cavity 513 is formed in the casing 510, and the electrode assembly 520 is provided in the accommodating cavity 513 to achieve arrangement of the electrode assembly 520 in the casing 510. The casing 510 protects the electrode assembly 520, improves the service reliability of the electrode assembly 520, and extends the service life of the electrode assembly 520. In addition, the casing 510 can support the electrode assembly 520, ensure the positional stability of the electrode assembly 520 to a certain extent, and help ensure the working performance of the electrode assembly 520 to a certain extent.

In some embodiments, one end of the accommodating cavity 513 is open, so that the electrode assembly 520 can be placed into the accommodating cavity 513 through the opening, and the casing 510 can support and protect the electrode assembly 520 conveniently.

In some embodiments, as shown in FIG. 3 and FIG. 4, the casing 510 includes an end cap 514, where the end cap 514 is provided at the opening of the accommodating cavity 513, so as to achieve sealing of the opening. This prevents external foreign objects from entering into the accommodating cavity 513 through the opening to a certain extent, and achieving the purpose of protecting the electrode assembly 520 through the casing 510.

Optionally, as shown in FIG. 3 and FIG. 4, the first electrode terminal 511 and the second electrode terminal 512 are provided on the end cap 514, so that while achieving arrangement of the first electrode terminal 511 and the second electrode terminal 512 on the casing 510, this structure can reduce the arrangement difficulty of the first electrode terminal 511 and the second electrode terminal 512, thereby facilitating electrical connection between the first electrode terminal 511 and the first tab 521 and electrical connection between the second electrode terminal 512 and the second tab 522, and ensuring the working performance of the battery cell 500 to a certain extent.

In some embodiments, as shown in FIG. 3, FIG. 4, and FIG. 6, the second connection end 112 of the first adapter portion 110 is provided with a first connection hole 1121, the fourth connection end 122 of the second adapter portion 120 is provided with a second connection hole 1221, the end cap 514 is provided with a first pole 5144 and a second pole 5145, and the first pole 5144 is configured to pass through the first connection hole 1121 and be electrically connected to the first electrode terminal 511, thereby achieving electrical connection between the second connection end 112 and the first electrode terminal 511, and the second pole 5145 is configured to pass through the second connection hole 1221 and be electrically connected to the second electrode terminal 512, thereby achieving electrical connection between the fourth connection end 122 and the second electrode terminal 512.

Optionally, as shown in FIG. 3 and FIG. 4, the end cap 514 further includes a lower plastic 5143 and a top cover plate 5142, where the lower plastic 5143 and the top cover plate 5142 are connected in cooperation, the first pole 5144 is configured to pass through the lower plastic 5143 and the top cover plate 5142 and be electrically connected to the first electrode terminal 511, and the second pole 5145 is configured to pass through the lower plastic 5143 and the top cover plate 5142 and be electrically connected to the second electrode terminal 512. While achieving electrical connection between the first pole 5144 and the first electrode terminal 511 and electrical connection between the second pole 5145 and the second electrode terminal 512, the lower plastic 5143 and the top cover plate 5142 can cooperate to support the first pole 5144 and the second pole 5145, improve the positional stability of the first pole 5144 and the second pole 5145, and help ensure the connection quality of the first pole 5144 and the second pole 5145 to a certain extent.

Optionally, as shown in FIG. 3 and FIG. 4, the end cap 514 further includes an upper plastic 5141, where at least part of the upper plastic 5141 is disposed between the first electrode terminal 511 and the second electrode terminal 512, so as to achieve an insulating fit between the first electrode terminal 511 and the second electrode terminal 512, prevent electrical connection between the first electrode terminal 511 and the second electrode terminal 512 to a certain extent, and ensure the service reliability of the battery cell 500 to a certain extent.

In some embodiments, as shown in FIG. 3, the battery cell 500 further includes a blue film 530, where the blue film 530 is provided in the accommodating cavity 513 and located on the outer periphery of the electrode assembly 520, to provide a stable and reliable space for the electrode assembly 520, thereby ensuring the working performance of the electrode assembly 520 to a certain extent, that is, ensuring the working performance of the battery cell 500 to a certain extent.

In some embodiments, as shown in FIG. 6, FIG. 7, and FIG. 8, the adapter 100 further includes a first insulating member 130, where in an overlapping direction, the first insulating member 130 is at least located between the first intermediate portion 113 and the second intermediate portion 123. This means that in the overlapping direction of the first protruding portion 1131 and the second protruding portion 1231, that is, in the up-down direction of the battery cell 500, the first insulating member 130 is at least located between the first intermediate portion 113 and the second intermediate portion 123. This arrangement enables the first insulating member 130 to form an insulating fit between the first intermediate portion 113 and the second intermediate portion 123, so as to prevent electrical connection between the first intermediate portion 113 and the second intermediate portion 123 to a certain extent, that is, prevent electrical connection between the first adapter portion 110 and the second adapter portion 120 to a certain extent, and ensure the working performance and service reliability of the battery cell 500 to a certain extent.

It should be noted that the overlapping direction mentioned herein can also be understood as the height direction of the adapter 100, that is, the up-down direction shown in FIG. 8, that is, the first intermediate portion 113 and the second intermediate portion 123 overlap in height, and are separated and insulated by the first insulating member 130 arranged therebetween.

In some embodiments, the first insulating member 130 is formed as a rubber member, and the rubber member is located between the first intermediate portion 113 and the second intermediate portion 123, to achieve an insulating fit between the first intermediate portion 113 and the second intermediate portion 123, and to ensure the insulating effect of the first insulating member 130 to a certain extent.

In some embodiments, as shown in FIG. 6, at least one of the first intermediate portion 113 and the second intermediate portion 123 is provided with a first positioning structure 150 for positioning the first insulating member 130. That is, the first intermediate portion 113 and/or the second intermediate portion 123 is provided with the first positioning structure 150, and the first positioning structure 150 is configured to position the first insulating member 130, so as to improve the positional stability of the first insulating member 130. Accordingly, the first insulating member 130 can be stably disposed between the first protruding portion 1131 and the second protruding portion 1231, thereby preventing electrical connection between the first protruding portion 1131 and the second protruding portion 1231 to a certain extent, and improving the working performance of the battery cell 500.

Moreover, using the first positioning structure 150 to position the first insulating member 130 can also reduce the positioning difficulty of the first insulating member 130.

In some embodiments, as shown in FIG. 6, the first intermediate portion 113 and the second intermediate portion 123 each are provided with the first positioning structure 150. Both the first positioning structure 150 on the first intermediate portion 113 and the first positioning structure 150 on the second intermediate portion 123 are used for positioning the first insulating member 130, which can improve the positioning quality, so that the first insulating member 130 can be stably disposed between the first protruding portion 1131 and the second protruding portion 1231.

In addition, when both the first intermediate portion 113 and the second intermediate portion 123 are provided with the first positioning structure 150, the first insulating member 130 can also be used to limit the positions of the first adapter portion 110 and the second adapter portion 120, so as to prevent relative displacement between the first adapter portion 110 and the second adapter portion 120 to a certain extent, thereby ensuring the structural stability and working performance of the adapter 100 to a certain extent.

In some embodiments, as shown in FIG. 6, the first positioning structure 150 is a positioning hole, and a part of the first insulating member 130 is accommodated in the first positioning structure 150. This arrangement achieves positioning fit between the first positioning structure 150 and the first insulating member 130, thereby facilitating positioning of the first insulating member 130 through the first positioning structure 150, and improving the positional stability of the first insulating member 130.

Moreover, configuring the first positioning structure 150 as a positioning hole can also reduce the fitting difficulty between the first positioning structure 150 and the first insulating member 130, thereby reducing the positioning difficulty of the first insulating member 130.

In some embodiments, as shown in FIG. 6, a plurality of positioning holes are provided on both the first intermediate portion 113 and the second intermediate portion 123, and the plurality of positioning holes cooperate to position the first insulating member 130, so as to ensure the positional stability of the first insulating member 130 to the maximum extent.

In some embodiments, the first insulating member 130 is provided with a positioning protrusion, and the positioning protrusion is capable of being in positioning fit in the positioning hole, so as to achieve a positioning fit between the first positioning structure 150 and the first insulating member 130, thereby facilitating positioning of the first insulating member 130 through the first positioning structure 150.

In some embodiments, as shown in FIG. 6, FIG. 7, and FIG. 8, the first intermediate portion 113 is provided with a first accommodating groove 1132 for accommodating the first insulating member 130; and/or the second intermediate portion 123 is provided with a second accommodating groove for accommodating the first insulating member 130. This means that an accommodating groove for accommodating the first insulating member 130 may be provided on one of the first intermediate portion 113 and the second intermediate portion 123, or accommodating grooves for accommodating the first insulating member 130 may be provided on both the first intermediate portion 113 and the second intermediate portion 123, so as to facilitate arrangement of the first insulating member 130 between the first intermediate portion 113 and the second intermediate portion 123, thereby achieving provision between the first protruding portion 1131 and the second protruding portion 1231. In this way, while achieving an insulating fit between the first protruding portion 1131 and the second protruding portion 1231, the assembly difficulty of the first insulating member 130 can also be reduced.

In some embodiments, as shown in FIG. 6, FIG. 7, and FIG. 8, the first intermediate portion 113 is provided with a first accommodating groove 1132 for accommodating the first insulating member 130. This means that the accommodating groove is provided only on the first intermediate portion 113. This arrangement facilitates disposing the first insulating member 130 between the first protruding portion 1131 and the second protruding portion 1231, and avoids disposing the accommodating groove on the second intermediate portion 123 to a certain extent, thereby reducing the molding difficulty of the second intermediate portion 123.

Certainly, in some other embodiments, the accommodating groove may also be provided only on the second intermediate portion 123. This arrangement facilitates disposing the first insulating member 130 between the first protruding portion 1131 and the second protruding portion 1231, and avoids disposing the accommodating groove on the first intermediate portion 113 to a certain extent, thereby reducing the molding difficulty of the first intermediate portion 113.

In some embodiments, a part of the first adapter portion 110 is deformed to define the first accommodating groove 1132. This means that when the accommodating groove is provided on the first intermediate portion 113, a part of the first adapter portion 110 is deformed to define the first accommodating groove 1132, thereby reducing the molding difficulty of the first accommodating groove 1132, facilitating disposing the first insulating member 130 between the first protruding portion 1131 and the second protruding portion 1231, and achieving an insulating fit between the first protruding portion 1131 and the second protruding portion 1231.

It should be noted that the deformation of the part of the first adapter portion 110 mentioned herein may be bending a part of the first adapter portion 110 to define the first accommodating groove 1132; or grooving on one side surface of the first adapter portion 110 to define the first accommodating groove 1132.

In some embodiments, as shown in FIG. 6, FIG. 7, and FIG. 8, a part of the first adapter portion 110 is bent to define the first accommodating groove 1132. This arrangement achieves formation of the first accommodating groove 1132, and can also ensure the structural strength of the first adapter portion 110 to a certain extent, thereby ensuring the working performance of the first adapter portion 110 to a certain extent, and extending the service life of the first adapter portion 110.

In some embodiments, a part of the second adapter portion 120 is deformed to define the second accommodating groove. That is, when the accommodating groove is provided on the second intermediate portion 123, a part of the second adapter portion 120 is deformed to define the second accommodating groove, thereby reducing the molding difficulty of the second accommodating groove.

The deformation of the part of the second adapter portion 120 mentioned herein may be bending a part of the second adapter portion 120 to define the second accommodating groove; or grooving on one side surface of the second adapter portion 120 to define the second accommodating groove.

In some embodiments, the first intermediate portion 113 protrudes away from the second intermediate portion 123, to form a first accommodating groove 1132 for accommodating the first insulating member 130 between the first intermediate portion 113 and the second intermediate portion 123. That is, the first accommodating groove 1132 for accommodating the first insulating member 130 is directly provided on the first intermediate portion 113, so that the first insulating member 130 can be effectively disposed between the first intermediate portion 113 and the second intermediate portion 123. In addition, grooving on the second intermediate portion 123 can be avoided to a certain extent, thereby reducing the molding difficulty of the accommodating groove and thus reducing the assembly difficulty of the first insulating member 130.

In some embodiments, a groove depth of the first accommodating groove 1132 is greater than a thickness of the first insulating member 130. This ensures that the first insulating member 130 can be perfectly embedded in the first accommodating groove 1132, facilitates disposing the first insulating member 130 between the first intermediate portion 113 and the second intermediate portion 123, enables the first accommodating groove 1132 to fix the first insulating member 130, and improves the positional stability of the first insulating member 130.

In some embodiments, a groove depth of the first accommodating groove 1132 is equal to a thickness of the first insulating member 130. Under this design, the first insulating member 130 can be perfectly embedded in the first accommodating groove 1132, and the second intermediate portion 123 can be directly covered over the first accommodating groove 1132 during assembly. This avoids forming a clearance groove on the second intermediate portion 123 to a certain extent to avoid the first insulating member 130 or arrange a matching protrusion embedded into the first accommodating groove 1132 on the second intermediate portion 123, reduces the molding difficulty of the second intermediate portion 123, and ensures the flatness of the surface of the second intermediate portion 123 a certain extent.

In some embodiments, the thickness of the first insulating member 130 is 0.3 mm to 0.7 mm. The thickness of the first insulating member 130 mentioned herein can be understood as T shown in FIG. 8. When the thickness of the first insulating member 130 is less than 0.3 mm, the insulating performance of the first insulating member 130 is reduced; and when the thickness of the first insulating member 130 is greater than 0.7 mm, on one hand, the manufacturing cost of the first insulating member 130 is increased, and on the other hand, the axial height of the battery cell 500 is also increased, and the occupied area of the battery cell 500 is increased.

Therefore, this application sets the thickness of the first insulating member 130 to 0.3 mm to 0.7 mm. This arrangement improves the insulating performance of the first insulating member 130, reduces the manufacturing cost of the first insulating member 130, lowers the height of the battery cell 500, and reduces the assembly difficulty of the battery cell 500.

In some embodiments, the thickness of the first insulating member 130 is 0.3 mm, 0.4 mm, 0.5 mm, 0.6 mm, 0.7 mm, or the like.

In some embodiments, the thickness of the first insulating member 130 is 0.5 mm to 0.6 mm. This further improves the insulating performance of the first insulating member 130, reduces the manufacturing cost of the first insulating member 130, and reduces the height of the battery cell 500.

In some embodiments, as shown in FIG. 5, FIG. 6, and FIG. 7, the adapter 100 further includes a second insulating member 140, where the second insulating member 140 is disposed between the first connection end 111 and the third connection end 121. This structure achieves an insulating fit between the first connection end 111 and the third connection end 121, prevents electrical connection between the first connection end 111 and the third connection end 121 to a certain extent, further prevents electrical connection between the first adapter portion 110 and the second adapter portion 120 to a certain extent, and ensures the working performance and service reliability of the battery cell 500 to a certain extent.

In some embodiments, the second insulating member 140 is formed as a rubber member, and the rubber member is disposed between the first connection end 111 and the third connection end 121, so as to achieve an insulating fit between the first connection end 111 and the third connection end 121, and to ensure the insulating effect of the second insulating member 140 to a certain extent.

In some embodiments, as shown in FIG. 6, at least one of the first connection end 111 and the third connection end 121 is provided with a second positioning structure 160 for positioning the second insulating member 140. That is, the first connection end 111 and/or the third connection end 121 is provided with the second positioning structure 160, and the second positioning structure 160 is used for positioning the second insulating member 140, so as to improve the positional stability of the second insulating member 140. Accordingly, the second insulating member 140 can be stably disposed between the first connection end 111 and the third connection end 121, thereby preventing electrical connection between the first connection end 111 and the third connection end 121 to a certain extent, and improving the working performance of the battery cell 500.

Moreover, using the second positioning structure 160 to position the second insulating member 140 can also reduce the positioning difficulty of the second insulating member 140.

In some embodiments, as shown in FIG. 6, the first connection end 111 and the third connection end 121 each are provided with the second positioning structure 160. Both the second positioning structure 160 on the first connection end 111 and the second positioning structure 160 on the third connection end 121 are used for positioning the second insulating member 140, which can improve the positioning quality, so that the second insulating member 140 can be stably disposed between the first connection end 111 and the third connection end 121.

In addition, when both the first connection end 111 and the third connection end 121 are provided with the second positioning structure 160, the first connection end 111 and the third connection end 121 can also cooperate to support the second insulating member 140, so as to improve the positional stability of the second insulating member 140, thereby ensuring that the first connection end 111 and the third connection end 121 can form an insulating fit through the second insulating member 140. The second insulating member 140 can also be used to limit the positions of the first adapter portion 110 and the second adapter portion 120, so as to prevent relative displacement between the first adapter portion 110 and the second adapter portion 120 to a certain extent, thereby ensuring the structural stability and working performance of the adapter 100 to a certain extent.

In some embodiments, as shown in FIG. 6, the second positioning structure 160 is a positioning hole, and a part of the second insulating member 140 is accommodated in the second positioning structure 160. This arrangement achieves a positioning fit between the second positioning structure 160 and the second insulating member 140, thereby facilitating positioning of the second insulating member 140 through the second positioning structure 160, and improving the positional stability of the second insulating member 140.

Moreover, configuring the second positioning structure 160 as a positioning hole can also reduce the fitting difficulty between the second positioning structure 160 and the second insulating member 140, thereby reducing the positioning difficulty of the second insulating member 140.

In some embodiments, as shown in FIG. 6, a plurality of positioning holes are provided on both the first connection end 111 and the third connection end 121, and the plurality of positioning holes cooperate to position the second insulating member 140, so as to ensure the positional stability of the second insulating member 140 to the maximum extent.

In some embodiments, the second insulating member 140 is provided with a positioning protrusion, and the positioning protrusion is capable of being in positioning fit in the positioning hole, so as to achieve a positioning fit between the second positioning structure 160 and the second insulating member 140, thereby facilitating positioning of the second insulating member 140 through the second positioning structure 160.

It should be noted that the cooperation of the positioning protrusion and the positioning hole mainly prevents positional offset of the second insulating member 140 in direction X and direction Y of the battery cell 500 to a certain extent, that is, restricts radial movement of the second insulating member 140 relative to the battery cell 500 to a certain extent.

In some embodiments, the second insulating member 140 is provided with a limiting groove opening toward the first connection end 111 and/or the third connection end 121, and at least part of the first connection end 111 and/or the third connection end 121 is fitted into the limiting groove. This improves the fitting strength between the second insulating member 140 and the first adapter portion 110 and the second adapter portion 120, and enables the first adapter portion 110 and the second adapter portion 120 to cooperatively limit the position of the second insulating member 140. Positional offset of the second insulating member 140 in the axial direction of the battery cell 500 is avoided to a certain extent, the positional stability of the second insulating member 140 is enhanced, and the working performance of the second insulating member 140 is ensured to a certain extent.

That is, by providing the limiting groove, positional offset of the second insulating member 140 in the axial direction of the battery cell 500 is mainly avoided to a certain extent, thereby ensuring the positional stability of the second insulating member 140 to a certain extent, and improving the insulating effect of the second insulating member 140.

In some embodiments, as shown in FIG. 5 and FIG. 7, the second insulating member 140 is provided with a positioning hole 141 aligned with the center hole of the electrode assembly 520. The positioning hole 141 can cooperate with the center hole of the electrode assembly 520 to serve a positioning role during installation of the adapter 100, so as to reduce the assembly difficulty of the adapter 100; on the other hand, when the battery cell 500 suffers thermal runaway, the positioning role can also perform a venting function, so as to improve the service reliability of the battery cell 500.

The battery cell 500 of this application will be described in detail below with reference to the accompanying drawings of the specification, the battery cell 500 being a cylindrical battery.

As shown in FIG. 3 and FIG. 4, the battery cell 500 includes: a casing 510, an electrode assembly 520, and an adapter 100.

As shown in FIG. 3, an accommodating cavity 513 is formed in the casing 510, the electrode assembly 520 is provided in the accommodating cavity 513, the electrode assembly 520 includes a first tab 521 and a second tab 522, the first tab 521 and the second tab 522 have opposite polarities, a blue film 530 is provided in the accommodating cavity 513 and located on the outer periphery of the electrode assembly 520, the casing 510 includes an end cap 514, and the end cap 514 is provided at the opening of the accommodating cavity 513.

As shown in FIG. 3 and FIG. 4, the end cap 514 further includes an upper plastic 5141, a lower plastic 5143, a top cover plate 5142, a first pole 5144, and a second pole 5145, where the first pole 5144 and the second pole 5145 are positive and negative poles, the lower plastic 5143 and the top cover plate 5142 are connected in cooperation, the upper plastic 5141 is provided on a side of the top cover plate 5142 away from the lower plastic 5143, the upper plastic 5141 is provided with a first electrode terminal 511 and a second electrode terminal 512, the first electrode terminal 511 and the second electrode terminal 512 are copper-aluminum riveted blocks, the first pole 5144 passes through the lower plastic 5143 and the top cover plate 5142 and is electrically connected to the first electrode terminal 511, and the second pole 5145 passes through the lower plastic 5143 and the top cover plate 5142 and is electrically connected to the second electrode terminal 512.

As shown in FIG. 3, FIG. 4, FIG. 5, and FIG. 6, the adapter 100 is disposed between the electrode assembly 520 and the casing 510 and includes a first adapter portion 110, a second adapter portion 120, a first insulating member 130, and a second insulating member 140.

As shown in FIG. 6, FIG. 9, and FIG. 10, the first adapter portion 110 is a copper adapter portion, the first adapter portion 110 includes a first connection end 111, a second connection end 112, and a first intermediate portion 113, the first adapter portion 110 is formed as a bent member so that the first connection end 111, the first intermediate portion 113, and the second connection end 112 are stacked in an up-down direction of the battery cell 500, the first connection end 111 is electrically connected to the first tab 521, the second connection end 112 is provided with a first connection hole 1121, the first pole 5144 passes through the first connection hole 1121 and is electrically connected to the second connection end 112, so as to achieve electrical connection between the second connection end 112 and the first electrode terminal 511, and the first intermediate portion 113 is electrically connected to the first connection end 111 and the second connection end 112.

As shown in FIG. 6, FIG. 9, and FIG. 10, the second adapter portion 120 is an aluminum adapter portion, the second adapter portion 120 includes a third connection end 121, a fourth connection end 122, and a second intermediate portion 123, so that the third connection end 121, the second intermediate portion 123, and the fourth connection end 122 are stacked in the up-down direction of the battery cell 500, the third connection end 121 is electrically connected to the second tab 522, the fourth connection end 122 is provided with a second connection hole 1221, the second pole 5145 passes through the second connection hole 1221 and is electrically connected to the fourth connection end 122, so as to achieve electrical connection between the fourth connection end 122 and the second electrode terminal 512, and the second intermediate portion 123 is electrically connected to the third connection end 121 and the fourth connection end 122, so as to achieve electrical connection between the first electrode terminal 511 and the first tab 521 and electrical connection between the second electrode terminal 512 and the second tab 522.

As shown in FIG. 5 and FIG. 6, in direction Y of the battery cell 500, the first connection end 111 and the third connection end 121 are spaced apart from each other, the second connection end 112 and the fourth connection end 122 are spaced apart from each other, the first intermediate portion 113 includes a first protruding portion 1131, the first protruding portion 1131 protrudes from the first connection end 111 toward the second adapter portion 120, with a protruding length of the first protruding portion 1131 not exceeding the second intermediate portion 123, the second intermediate portion 123 includes a second protruding portion 1231, the second protruding portion 1231 protrudes from the third connection end 121 toward the first adapter portion 110, with a protruding length of the second protruding portion 1231 not exceeding the first intermediate portion 113, and the first intermediate portion 113 and the second intermediate portion 123 are arranged in an overlapping manner in the axial direction of the battery cell 500, so as to achieve widening of middle parts of the first adapter portion 110 and the second adapter portion 120.

The width w of the first intermediate portion 113 and the second intermediate portion 123 in direction Y is equal to D - 4 mm, where D is a diameter of the battery cell 500.

As shown in FIG. 6, FIG. 7, and FIG. 8, the first intermediate portion 113 protrudes away from the second intermediate portion 123, so that the first intermediate portion 113 and the second intermediate portion 123 are offset in a height direction of the battery cell 500, thereby facilitating formation of a first accommodating groove 1132 for accommodating the first insulating member 130 between the first intermediate portion 113 and the second intermediate portion 123, the thickness of the first insulating member 130 is 0.5 mm, a groove depth of the first accommodating groove 1132 is equal to the thickness of the first insulating member 130, the first insulating member 130 is provided in the first accommodating groove 1132, so as to achieve arrangement of the first insulating member 130 between the first intermediate portion 113 and the second intermediate portion 123, so that the first intermediate portion 113 and the second intermediate portion 123 can be separated by the first insulating member 130, the first intermediate portion 113 and the second intermediate portion 123 each are provided with a positioning hole for positioning the first insulating member 130, and a part of the first insulating member 130 is accommodated in the positioning hole.

As shown in FIG. 5, FIG. 6, and FIG. 7, the second insulating member 140 is disposed between the first connection end 111 and the third connection end 121, the second insulating member 140 is provided with a positioning hole 141 aligned with the center hole of the electrode assembly 520, two ends of the second insulating member 140 in direction Y are respectively provided with a limiting groove opening toward the first connection end 111 and the third connection end 121, at least part of the first connection end 111 and at least part of the third connection end 121 are fitted into the limiting grooves, the first connection end 111 and the third connection end 121 each are provided with a positioning hole for positioning the second insulating member 140, and a part of the second insulating member 140 is accommodated in the positioning hole.

The battery pack 400 according to embodiments of the second aspect of this application will be described below with reference to the accompanying drawings of the specification.

As shown in FIG. 2, the battery pack 400 according to embodiments of this application includes a plurality of the battery cells 500 described in the above embodiments.

Since the battery cell 500 according to embodiments of this application has the above technical effects, the battery pack 400 according to embodiments of this application also has the above technical effects, that is, by adopting the battery cell 500 of this application, the working performance of the battery pack 400 can be effectively ensured to a certain extent.

It should be noted that, in the battery pack 400, the plurality of battery cells 500 may be connected in series, in parallel, or in a series-parallel combination, where the series-parallel combination means that the plurality of battery cells 500 are connected both in series and in parallel.

The electric device 1000 according to embodiments of the third aspect of this application will be described below with reference to the accompanying drawings of the specification.

As shown in FIG. 1, the electric device 1000 according to embodiments of this application includes the battery pack 400 described in the above embodiments.

Since the battery pack 400 according to embodiments of this application has the above technical effects, the electric device 1000 according to embodiments of this application also has the above technical effects, that is, by adopting the battery pack 400 of this application, the working performance of the electric device 1000 can be effectively ensured to a certain extent.

It can be understood that other configurations and operations of the battery cell 500, the battery pack 400, and the electric device 1000 according to embodiments of this application are known to those of ordinary skill in the art, and will not be described in detail herein.

It should be noted that, in the case of no conflict, the embodiments in this application and features in the embodiments can be combined with each other.

The above are only preferred embodiments of this application and are not intended to limit this application. For those of ordinary skill in the art, this application may have various changes and modifications. Any modifications, equivalent replacements, improvements, and the like made within the spirit and principles of this application shall be included in the protection scope of this application.

## Claims

1. A battery cell, comprising:
a casing, wherein the casing is provided with a first electrode terminal and a second electrode terminal;
an electrode assembly, wherein the electrode assembly comprises a first tab and a second tab having opposite polarities; and
an adapter, wherein the adapter is disposed between the electrode assembly and the casing and comprises a first adapter portion and a second adapter portion, the first adapter portion is electrically connected to the first electrode terminal and the first tab, the second adapter portion is electrically connected to the second electrode terminal and the second tab, and at least part of the first adapter portion and at least part of the second adapter portion are arranged in an overlapping manner in an axial direction of the battery cell.

2. The battery cell according to claim 1, wherein the first adapter portion comprises a first connection end, a second connection end, and a first intermediate portion, wherein the first connection end is electrically connected to the first tab, the second connection end is electrically connected to the first electrode terminal, and the first intermediate portion is electrically connected to the first connection end and the second connection end;
the second adapter portion comprises a third connection end, a fourth connection end, and a second intermediate portion, wherein the third connection end is electrically connected to the second tab, the fourth connection end is electrically connected to the second electrode terminal, and the second intermediate portion is electrically connected to the third connection end and the fourth connection end; and in a first direction, the first connection end and the third connection end are spaced apart from each other, the second connection end and the fourth connection end are spaced apart from each other, the first intermediate portion and the second intermediate portion are arranged in an overlapping manner in the axial direction of the battery cell, and the first direction intersects the axial direction.

3. The battery cell according to claim 2, wherein the first intermediate portion comprises a first protruding portion, the first protruding portion protruding from the first connection end toward the second adapter portion; and/or the second intermediate portion comprises a second protruding portion, the second protruding portion protruding from the third connection end toward the first adapter portion.

4. The battery cell according to claim 3, wherein a protruding length of the first protruding portion does not exceed the second intermediate portion, and a protruding length of the second protruding portion does not exceed the first intermediate portion.

5. The battery cell according to any one of claims 2 to 4, wherein a width of the first intermediate portion and/or the second intermediate portion in the first direction is w, and a diameter of the battery cell is D, wherein 3 mm ≤ w ≤ D - 2 mm.

6. The battery cell according to claim 5, wherein 6 mm ≤ w ≤ D - 4 mm.

7. The battery cell according to any one of claims 2 to 6, wherein the first adapter portion is formed as a bent member, the first connection end, the first intermediate portion, and the second connection end are stacked in a second direction, and the second direction intersects the first direction; and
the second adapter portion is formed as a bent member, the third connection end, the second intermediate portion, and the fourth connection end are stacked in the second direction.

8. The battery cell according to any one of claims 2 to 7, wherein the first adapter portion is a copper adapter portion; and
the second adapter portion is an aluminum adapter portion.

9. The battery cell according to any one of claims 2 to 8, further comprising a first insulating member, wherein in an overlapping direction, the first insulating member is at least located between the first intermediate portion and the second intermediate portion.

10. The battery cell according to claim 9, wherein at least one of the first intermediate portion and the second intermediate portion is provided with a first positioning structure for positioning the first insulating member.

11. The battery cell according to claim 10, wherein the first positioning structure is a positioning hole, and a part of the first insulating member is accommodated in the first positioning structure.

12. The battery cell according to any one of claims 9 to 11, wherein the first intermediate portion is provided with a first accommodating groove for accommodating the first insulating member;
and/or the second intermediate portion is provided with a second accommodating groove for accommodating the first insulating member.

13. The battery cell according to claim 12, wherein a part of the first adapter portion is deformed to define the first accommodating groove;
and/or a part of the second adapter portion is deformed to define the second accommodating groove.

14. The battery cell according to any one of claims 9 to 11, wherein the first intermediate portion protrudes away from the second intermediate portion, to form a first accommodating groove for accommodating the first insulating member between the first intermediate portion and the second intermediate portion.

15. The battery cell according to claim 14, wherein a groove depth of the first accommodating groove is greater than a thickness of the first insulating member.

16. The battery cell according to claim 14 or 15, wherein a groove depth of the first accommodating groove is equal to a thickness of the first insulating member.

17. The battery cell according to any one of claims 9 to 16, wherein the thickness of the first insulating member is 0.3 mm to 0.7 mm.

18. The battery cell according to any one of claims 9 to 17, wherein the thickness of the first insulating member is 0.5 mm to 0.6 mm.

19. The battery cell according to any one of claims 2 to 18, further comprising a second insulating member, wherein the second insulating member is disposed between the first connection end and the third connection end.

20. The battery cell according to claim 19, wherein at least one of the first connection end and the third connection end is provided with a second positioning structure for positioning the second insulating member.

21. The battery cell according to claim 20, wherein the second positioning structure is a positioning hole, and a part of the second insulating member is accommodated in the second positioning structure.

22. The battery cell according to any one of claims 19 to 21, wherein the second insulating member is provided with a limiting groove opening toward the first connection end and/or the third connection end, and at least part of the first connection end and/or the third connection end is fitted into the limiting groove.

23. The battery cell according to any one of claims 19 to 22, wherein the second insulating member is provided with a positioning hole aligned with the center hole of the electrode assembly.

24. The battery cell according to any one of claims 1 to 23, wherein the battery cell is a cylindrical battery.

25. A battery pack, comprising a plurality of the battery cells according to any one of claims 1 to 24.

26. An electric device, comprising the battery pack according to claim 25, wherein the battery pack is configured to provide electric energy.
